# EUROPEAN PATENT APPLICATION

(11) **EP 4 290 217 A1**
(43) Date of publication of application: **13.12.2023**
(21) Application number: 21924852.3
(22) Date of filing: 20.12.2021
(51) Int. Cl.: G01N 21/27, G01N 21/65

(54) **SPECTROMETRY DEVICE AND SPECTROMETRY METHOD**

(30) Priority: 04.02.2021 JP 2021016751
(71) Applicant: OSAKA UNIVERSITY, Suita-shi Osaka 565-0871 (JP)
(72) Inventor: FUJITA Katsumasa, Suita-shi, Osaka 565-0871 (JP); BANDO Kazuki, Suita-shi, Osaka 565-0871 (JP)
(74) Representative: Banse & Steglich Patentanwälte PartmbB
(86) International application number: PCT/JP2021/046916
(87) International publication number: WO 2022/168467

(57) **Abstract**

A spectrometry apparatus (1) according to an embodiment includes a detection object lens that signal light from a sample S enters, a slit (41) through which the signal light passes, a wavelength dispersive element that disperses the signal light having passed the slit (41) in accordance with a wavelength, an optical detector (50) that detects the signal light that has been subjected to wavelength dispersion in the wavelength dispersive element, scanning means for scanning a detection region of the optical detector (50) in the sample, a processing unit (51) that generates a spectral image, based on a detection signal of the optical detector (50), and an illumination optical system (10) that illuminates the sample from a side of the detection object lens.

## Description

### Technical Field

The present invention relates to a spectrometry apparatus and a spectrometry method, and particularly to a spectrometry apparatus and a spectrometry method that perform spectrometry of signal light such as Raman scattering light generated in a sample.

### Background Art

Non-Patent Literature 1 discloses a Raman imaging method of detecting Raman scattering light from a sample with a spectrometer using sheet illumination as excitation light. In Non-Patent Literature 1, the excitation light becomes the sheet illumination through a cylindrical lens. The Raman scattering light propagates to the spectrometer by an optical system including an object lens, a notch filter, a bandpass filter, and the like. The excitation light is delivered to the sample not through the object lens.

### Citation List

### Non Patent Literature

**Non Patent Literature 1**
"Optical sectioning using single-plane-illumination Raman imaging" Ishan Barman, a Khay Ming Tanb and Gajendra Pratap Singhb, J. Raman Spectrosc. 2010, 41, 1099-1101

### Summary of Invention

The present disclosure has been made in view of the above point and an object is to provide a spectrometry apparatus and a spectrometry method that can perform spectrometry with a high SN ratio by reducing background light.

A spectrometry apparatus according to an embodiment includes a detection object lens that signal light from a sample enters, a slit having a slit opening through which the signal light passes, a wavelength dispersive element that disperses the signal light having passed the slit opening in accordance with a wavelength, a two-dimensional optical detector that detects the signal light that is dispersed by the wavelength dispersive element, a processing unit that generates a spectral image, based on a detection signal of the two-dimensional optical detector, and an illumination optical system that makes illumination light enter the sample from a side of the detection object lens.

The spectrometry apparatus may further include means for scanning the sample or the illumination light.

The spectrometry apparatus may further include means for feeding the sample in a flow channel.

In the spectrometry apparatus, an arrangement direction of pixels in the two-dimensional optical detector and a dispersing direction of the wavelength dispersive element may be inclined diagonally.

In the spectrometry apparatus, the slit may be a multi-slit having a plurality of slit openings.

In the spectrometry apparatus, the slit opening may be formed along a direction that is orthogonal or parallel to an optical axis direction of the illumination light that enters the sample.

In the spectrometry apparatus, the illumination optical system may condense the illumination light on the sample as a Bessel beam, sheet-shaped illumination, or lattice illumination.

The spectrometry apparatus may further include an illumination object lens that condenses the illumination light on the sample, and a filter that is disposed between the illumination object lens and the sample and transmits the illumination light.

The spectrometry apparatus may further include an illumination object lens that condenses the illumination light on the sample, and a polarization control element that makes a polarized state in a direction parallel to the optical axis of the illumination light on the sample, in which the slit opening may be formed along the optical axis direction.

In the spectrometry apparatus, the sample may flow in a flow channel, and an optical axis of the illumination light that enters the sample is in a direction orthogonal to a direction of the flow channel.

In the spectrometry apparatus, at least one surface of the flow channel may be a reflection surface that reflects the signal light.

In the spectrometry apparatus, the signal light from the sample flowing in the flow channel may be detected in different pixels in the two-dimensional optical detector, and detection signals from the different pixels may be integrated.

In the spectrometry apparatus, the signal light may be detected at a magnification at which a cell as the sample corresponds to one pixel of the two-dimensional optical detector in a direction orthogonal to a wavelength dispersing direction of the wavelength dispersive element.

In the spectrometry apparatus, the sample or the illumination light may be scanned in a direction along an optical axis of the detection object lens.

A spectrometry method according to this embodiment includes: a step of illuminating a sample from a side of a detection object lens; a step of causing signal light from the sample to enter the detection object lens; a step of causing the signal light to pass a slit opening of a slit; a step of causing the signal light having passed the slit opening to be subjected to wavelength dispersion by a wavelength dispersive element; a step of detecting the signal light subjected to the wavelength dispersion by the wavelength dispersive element, with a two-dimensional optical detector; and a step of generating a spectral image based on a detection signal of the two-dimensional optical detector.

According to the present invention, the spectrometry apparatus and the spectrometry method that can perform spectrometry with the high SN ratio by reducing background light can be provided.

### Brief Description of Drawings

Fig. 1 is a schematic diagram illustrating an optical system of a spectrometry apparatus according to Embodiment 1;
Fig. 2 is a perspective diagram schematically illustrating a sample and an object lens;
Fig. 3 is a schematic diagram illustrating an optical system of a spectrometry apparatus according to Embodiment 2;
Fig. 4 is a perspective diagram schematically illustrating the sample and the object lens;
Fig. 5 is a schematic diagram illustrating an optical system of a spectrometry apparatus according to Embodiment 3;
Fig. 6 is a perspective diagram schematically illustrating the sample and the object lens;
Fig. 7 is a schematic diagram illustrating an optical system of a spectrometry apparatus according to Modified example 1 of Embodiment 3;
Fig. 8 is a schematic diagram illustrating an optical system of a spectrometry apparatus according to Embodiment 4;
Fig. 9 is a perspective diagram schematically illustrating the sample and the object lens;
Fig. 10 is a schematic diagram illustrating an optical system of a spectrometry apparatus according to Modified example 2 of Embodiment 4;
Fig. 11 is a diagram for describing a wavelength dispersing direction on a light reception surface of an optical detector;
Fig. 12 is a diagram illustrating one example of the optical system;
Fig. 13 is a diagram illustrating a structure for detecting Raman scattering light emitted to a -Z side;
Fig. 14 is a diagram illustrating the structure for detecting Raman scattering light emitted to the -Z side;
Fig. 15 is a diagram illustrating structures of Examples 1 to 4;
Fig. 16 is a diagram illustrating a structure of Example 5;
Fig. 17 is a diagram illustrating structures of Example 6 and Example 7;
Fig. 18 is a diagram illustrating a structure of Example 8;
Fig. 19 is a diagram illustrating a structure of Example 9;
Fig. 20 is a diagram illustrating a structure using a polarization control element that controls polarization of illumination light;
Fig. 21 is a diagram illustrating an example in which optical axes of the illumination light and signal light are inclined from a vertical direction;
Fig. 22 is a diagram illustrating an example in which the optical axes of the illumination light and the signal light are inclined from the vertical direction;
Fig. 23 is a schematic diagram illustrating one example of a slit direction and a direction of a flow channel;
Fig. 24 is a schematic diagram illustrating one example of the slit direction and the direction of the flow channel;
Fig. 25 is a schematic diagram illustrating one example of the slit direction and the direction of the flow channel;
Fig. 26 is a schematic diagram for describing the sample flowing in the flow channel and an operation of pixels;
Fig. 27 is a schematic diagram for describing the sample flowing in the flow channel and the operation of the pixels; and
Fig. 28 is a schematic diagram for describing the sample flowing in the flow channel and the operation of the pixels.

### Description of Embodiments

Embodiments to which the present invention is applicable are hereinafter described. The following description is to describe the embodiments of the present invention and the present invention is not limited to the following embodiments. For clarification, the following description is omitted and simplified as necessary. A person who is skilled in the art may be able to easily change, add, or modify each component in the embodiments below in the scope of the present invention. Note that the components denoted with the same reference signs throughout the drawings indicate the similar components and the description is omitted as appropriate.

### Embodiment 1

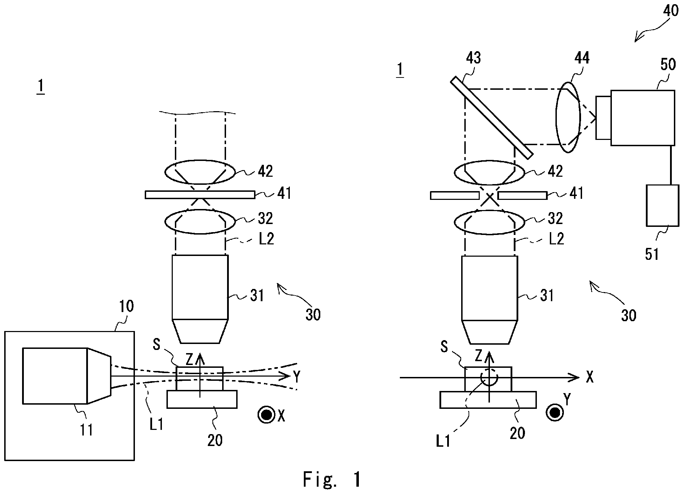

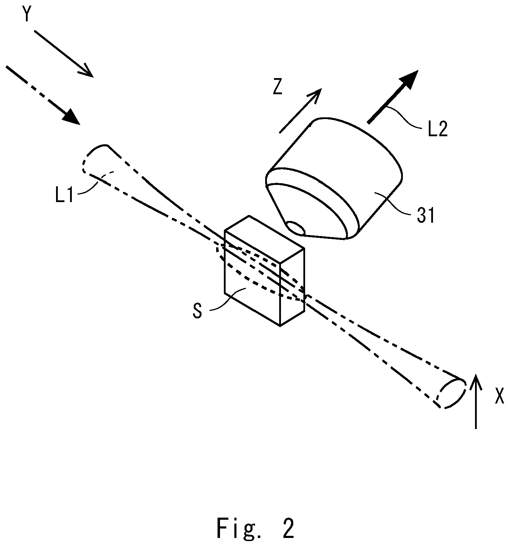

A spectrometry apparatus and a measurement method for the same according to Embodiment 1 are described with reference to Fig. 1 and Fig. 2. Fig. 1 is a schematic diagram illustrating an optical system in a spectrometry apparatus 1. In Fig. 1, a YZ plan view is expressed on the left side and an XZ plan view is expressed on the right side. Fig. 2 is a diagram schematically illustrating an object lens 31 and a sample S. The spectrometry apparatus 1 includes an illumination optical system 10, a driving stage 20, a detection optical system 30, and a processing unit 51. Note that the driving stage 20 is omitted in Fig. 2.

For simplifying the description, the description is made using an XYZ three-dimensional orthogonal coordinate system. A Z direction is a detection direction. Therefore, the Z direction is a direction parallel to the optical axis of the object lens 31. The XY plane is a plane orthogonal to the optical axis of detection light, and is a plane parallel to a surface where the sample S is disposed. A Y direction corresponds to an optical axis direction of illumination light L1 to be delivered to the sample S. In other words, the Y direction is a direction parallel to the optical axis of a lens 11 that condenses the illumination light L1 on the sample S.

The illumination optical system 10 is an optical system for guiding the illumination light L1 to the sample S. In the illumination optical system 10, a light source that is not illustrated generates the illumination light L1. The illumination light L1 is an Nd/YVO4 laser that emits CW (continuous wave) light with a wavelength of 532 nm. The illumination optical system 10 includes the lens 11. The lens 11 is the object lens for illumination that condenses the illumination light L1 on the sample S. The optical axis of the lens 11 is parallel to the Y direction.

The illumination light L1 is delivered to the sample S from the side of the object lens 31. The illumination light L1 is a Bessel beam. For example, the illumination optical system 10 may form a Bessel beam using an axicon lens or a spatial modulator that is not illustrated. The illumination light L1 is excitation light that excites the sample S. In the sample S, Raman scattering light is generated from a region illuminated with the illumination light L1. The Raman scattering light is emitted in various directions.

The detection optical system 30 includes the object lens 31, a lens 32, a slit 41, a lens 42, a grating 43, a lens 44, and an optical detector 50. The slit 41, the lens 42, the grating 43, the lens 44, and a spectrometer 40 are formed. The detection optical system 30 guides the Raman scattering light generated in the sample S to the optical detector 50.

The object lens 31 is a detection object lens. The optical axis of the object lens 31 is orthogonal to the optical axis of the lens 11. In the sample S, the Raman scattering light emitted in a direction of the object lens 31, that is, to a +Z direction enters the object lens 31. The Raman scattering light condensed by the object lens 31 enters the lens 32. The focal point of the object lens 31 may coincide with the condensing point of the illumination light L1.

The Raman scattering light from the object lens 31 is signal light L2. The lens 32 condenses the signal light L2 on the slit 41. The slit 41 has a slit opening whose long-side direction coincides with the Y direction and short-side direction (slit width direction) coincides with an X direction. The slit 41 is disposed at a position conjugated with a focal surface of the object lens 31. By the confocal effect, high resolution can be obtained.

The signal light L2 having passed the slit 41 is condensed by the lens 42 to become a parallel light flux, and the signal light L2 from the lens 42 enters the grating 43. The grating 43 is a wavelength dispersive element that disperses the wavelength of the signal light L2. The grating 43 has a diffraction angle according to the wavelength, and disperses the wavelength of the signal light L2 in a direction inclined from the long-side direction of the slit (Y direction). The wavelength dispersive element of the spectrometer 40 is not limited to the grating 43 and may be a prism or the like.

The signal light L2 from the grating 43 enters the optical detector 50 through the lens 44. The lens 44 is an imaging lens and forms an image of the slit opening on a light reception surface of the optical detector 50. The optical detector 50 is a two-dimensional optical detector such as a CCD (Charge Coupled Device) camera or a CMOS (Complementary Metal Oxide Semiconductor) image sensor. The optical detector 50 includes a plurality of pixels arranged in the X direction and the Y direction, for example. The Y coordinate of the optical detector 50 corresponds to the position in the slit opening. That is to say, the Y coordinate of the optical detector 50 corresponds to the Y-direction position in the sample S. In addition, in a case where the wavelength dispersing direction is orthogonal to the Y direction, the X coordinate of the optical detector 50 corresponds to the wavelength of the signal light L2.

The sample S is placed on the driving stage 20. The driving stage 20 is a three-dimensional movable stage that can be driven in the XYZ directions. For example, the driving stage 20 moves the sample S in the X direction. Thus, the illumination position in the sample S and a detection region of the optical detector 50 in the sample S are scanned. As the sample S is scanned in a direction orthogonal to the slit opening, the signal light L2 from the two-dimensional region of the sample S is detected. Needless to say, not just the scanning by the driving stage 20 but also the scanning of the optical system may be employed.

The processing unit 51 is an information processing apparatus such as a personal computer. The optical detector 50 outputs a detection signal to the processing unit 51. The processing unit 51 stores the value of the detection signal in a memory or the like for each pixel of the optical detector 50. The processing unit 51 associates the detection signal with the scanning position of the driving stage 20. The processing unit 51 generates a spectral image based on the detection signal. By performing a predetermined operation in the processing unit 51, a Raman spectral image can be displayed on a screen. In addition, the processing unit 51 can store the data of the spectral image in the memory or the like.

The spectrometer 40 spectrally divides the signal light L2. The signal light L2 spectrally divided in the spectrometer 40 is detected by the optical detector 50. Therefore, the image of one frame of the optical detector 50 is the data of the position and the wavelength in the long-side direction of the slit. Moreover, the sample S is moved in the X direction using the driving stage 20 on which the sample S is placed or the like. Thus, the detection region of the optical detector 50 in the sample S is scanned. That is to say, the sample S is scanned in the direction orthogonal to the long-side direction of the slit. The Raman scattering light from the two-dimensional region of the sample S can be detected. The two-dimensional Raman spectral image of the sample S can be captured.

Thus, the illumination optical system 10 illuminates the sample S from the side of the object lens 31. The illumination light L1 is delivered to the sample S not through the object lens 31. Since the object lens 31 and the lens 11 are not co-axial, the background light from the sample or the optical system can be reduced. The signal light L2 can be detected with a high SN ratio. Additionally, the Raman spectral imaging at a high throughput can be achieved.

For example, the light quantity of the Raman scattering light is about ten and several digits smaller than that of fluorescence. In addition, in the illumination optical system 10 and the detection optical system 30, fluorescence and scattering light may be generated other than in the sample due to the delivery of the illumination light. For example, fluorescence and Raman scattering light are generated also in various optical elements such as an object lens, a filter, and an intermediate optical system. In a case where the sample S is a biological sample, a tissue sample, or the like, fluorescence and Raman scattering light are generated also from a substrate of the sample S. If fluorescence and Raman scattering light from other than the sample S is detected as the background light, the SN ratio decreases. In addition, fluorescence and Raman scattering light are also generated from other than the focal surface of the sample S.

Therefore, by the illumination of the sample S from the side of the object lens 31, the background light generated at the illumination optical system 10 or the substrate of the sample S can be reduced. That is to say, since the illumination light L1 is not delivered to the optical element in the detection optical system 30, the background light can be suppressed. Additionally, the slit 41 is disposed at the position conjugated with the sample S. Therefore, it is possible to suppress the detection of the background light generated in other than the focal surface of the sample S by the confocal effect. According to this embodiment, the Raman spectral imaging with the high SN ratio can be achieved. Note that the detection optical system 30 may be provided with a filter such as an edge filter. By providing the filter that transmits the Raman scattering light and blocks the illumination light L1 in the optical path, the SN ratio can be increased further.

### Embodiment 2

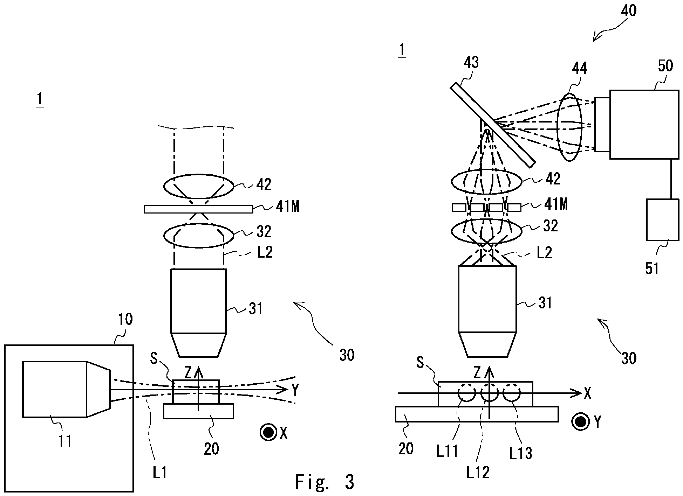

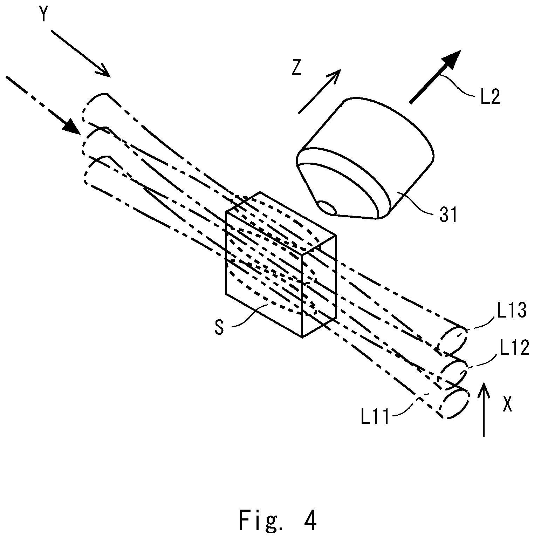

Embodiment 2 is described with reference to Fig. 3 and Fig. 4. Fig. 3 is a schematic diagram illustrating the optical system of the spectrometry apparatus 1. In Fig. 3, the YZ plan view is expressed on the left side and the XZ plan view is expressed on the right side. Fig. 4 is a perspective diagram schematically illustrating the object lens 31 and the sample S. In Fig. 4, the driving stage 20 is omitted.

In the embodiment, the illumination is performed using multi-beams. Since the fundamental structure of the spectrometry apparatus 1 other than the multi-beam illumination is similar to that in Embodiment 1, the description is omitted. In Fig. 3 and Fig. 4, three multi-beams are used and these are illustrated as illumination beams L11, L12, and L13. The three illumination beams L11, L12, and L13 are collectively described as the illumination light L1. In other words, the illumination light L1 includes the three illumination beams L11, L12, and L13. Needless to say, the number of illumination beams is not limited to three and may be two or four or more.

The illumination beams L11, L12, and L13 propagate along the optical axis parallel to the Y direction. The three illumination beams L11, L12, and L13 are arranged in the X direction. In other words, the illumination beam L13 exists on the +X side of the illumination beam L12 and the illumination beam L11 exists on the -X side. In the X direction, the illumination beams L11, L12, and L13 illuminate the different positions of the sample S. Each of the illumination beams L11, L12, and L13 is a Bessel beam.

On the entry side of the spectrometer 40, a multi-slit 41M is disposed. The multi-slit 41M includes a plurality of slit openings. Here, the multi-slit 41M includes three slit openings in accordance with the number of illumination beams. The long-side direction of each slit opening is the Y direction. The short-side direction (width direction) of each slit opening is the X direction. The plurality of slit openings are arranged in the X direction. The focal surface of the object lens 31 is in the position conjugated with the multi-slit 41M.

Therefore, the Raman scattering light from the region illuminated with the illumination beam L11 transmits the first slit opening. Similarly, the Raman scattering light from the region illuminated with the illumination beam L12 transmits the second slit opening. The Raman scattering light from the region illuminated with the illumination beam L13 transmits the third slit opening.

As in Embodiment 1, the driving stage or the like scans the sample S in the X direction. Thus, the Raman spectral image can be obtained. In this embodiment, the Raman scattering light can be detected with the high SN ratio like in Embodiment 1. Since the signal light L2 from the plurality of regions can be detected at the same time, the spectrometry time can be shortened.

### Embodiment 3

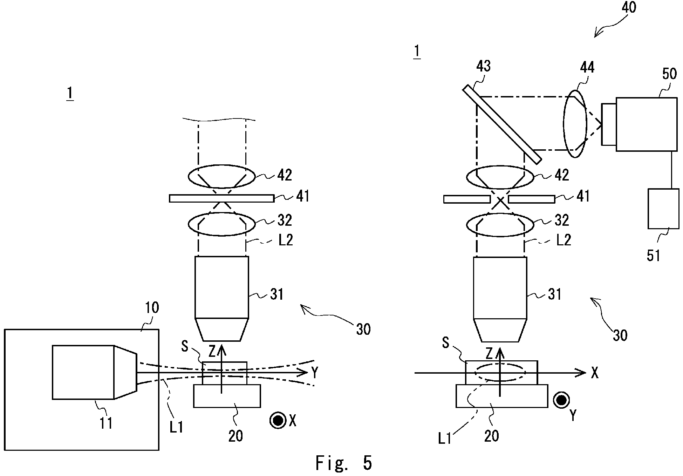

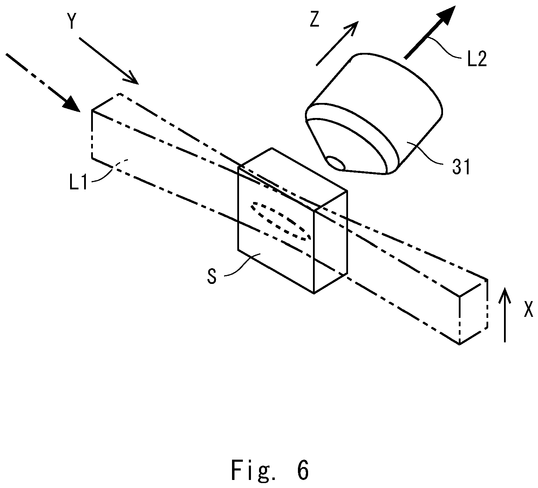

A spectrometry apparatus according to Embodiment 3 is described with reference to Fig. 5 and Fig. 6. Fig. 5 is a schematic diagram illustrating the optical system of the spectrometry apparatus 1. In Fig. 5, the YZ plan view is expressed on the left side and the XZ plan view is expressed on the right side. Fig. 6 is a perspective diagram schematically illustrating the object lens 31 and the sample S. In Fig. 6, the driving stage 20 is omitted.

In Embodiment 3, sheet-shaped illumination is used. Except the point that the sheet-shaped illumination is used, Embodiment 3 is similar to Embodiment 1; thus, the description is omitted. For example, on the entry side of the spectrometer 40, the slit 41 with one slit opening is provided.

The illumination light L1 enters the sample S with the optical axis direction coinciding with the Y direction. The illumination light L1 is the sheet-shaped illumination light spreading in the X direction. For example, by using a cylindrical lens in the illumination optical system 10, the sheet-shaped illumination is formed. In this case, the cylindrical lens condenses the illumination light L1 in the Z direction and does not condense light in the X direction. The illumination light L1 illuminates uniformly a region wide in the X direction in the sample S. That is to say, a region much wider than the field of vision of the object lens 31 can be illuminated with the uniform illumination light L1.

Then, the position of the sample S relative to the object lens 31 is moved in the X direction. For example, the driving stage on which the sample S is placed is driven in the X direction. Alternatively, the detection optical system 30 including the object lens 31 may be moved. Thus, the detection region of the optical detector 50 in the sample S changes in the X direction. The Raman scattering light from the two-dimensional region of the sample S can be detected. The Raman spectral image can be captured with the high SN ratio.

### Modified example 1

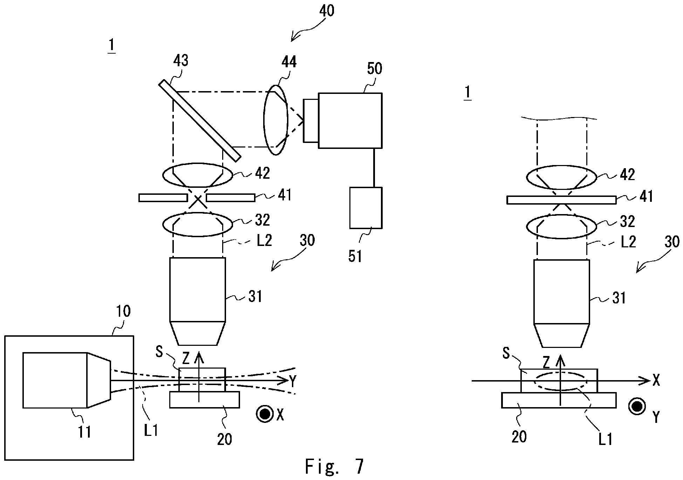

Fig. 7 is a diagram illustrating the spectrometry apparatus 1 according to Modified example 1, which is a modification of Embodiment 3. In Fig. 7, the YZ plan view is expressed on the left side and the XZ plan view is expressed on the right side. In Fig. 7, the direction of the slit 41 and the wavelength dispersing direction are different from those in the structure of Fig. 5. Specifically, the slit 41 includes a slit opening whose long-side direction coincides with the X direction. The width direction of the slit opening is the Y direction.

The grating 43 disperses the wavelength of the signal light L2 in the X direction and in an inclined direction. Here, the grating 43 disperses the signal light L2 in the Y direction in accordance with the wavelength. The relative position of the object lens 31 to the sample S is moved in the Y direction. Thus, the Raman scattering light from the two-dimensional region in the XY directions can be detected. As in Embodiments 1 to 3, the Raman spectral image can be captured with the high SN ratio. In the case of using the sheet-shaped illumination, the direction where the sample S is illuminated, that is, the optical axis direction of the illumination light L1 can be made orthogonal to the slit opening.

### Embodiment 4

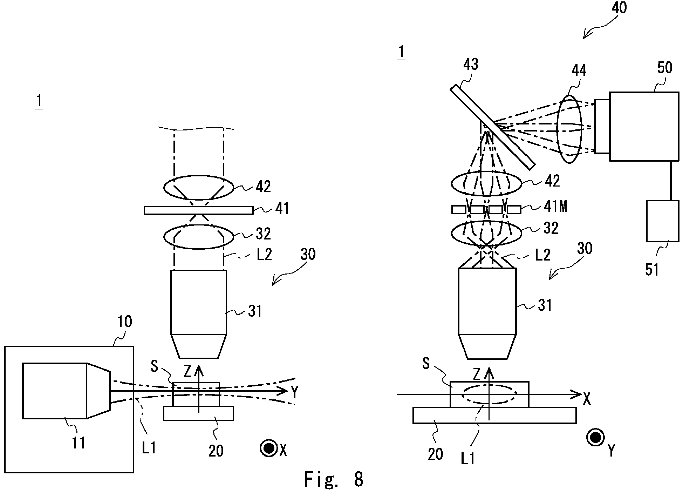

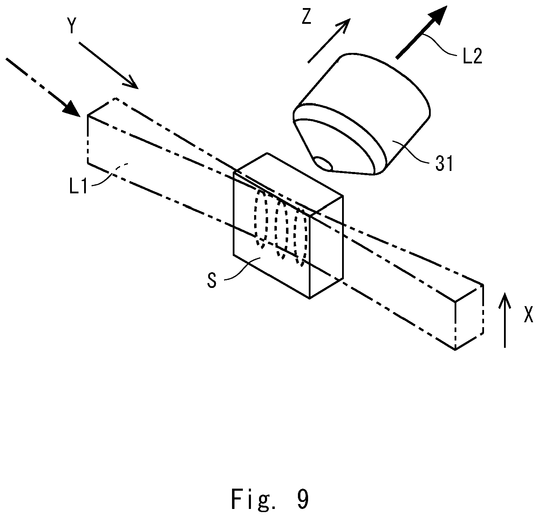

A spectrometry apparatus according to Embodiment 4 is described with reference to Fig. 8 and Fig. 9. Fig. 8 is a schematic diagram illustrating an optical system of the spectrometry apparatus 1. In Fig. 8, the YZ plan view is expressed on the left side and the XZ plan view is expressed on the right side. Fig. 9 is a perspective diagram schematically illustrating the object lens 31 and the sample S. In Fig. 8, the sample S is omitted.

In Embodiment 4, the sheet-shaped illumination similar to that in Embodiment 3 is used. Therefore, the region that is much wider than the field of vision of the object lens 31 is illuminated in the X direction. Additionally, in Embodiment 4, the multi-slit 41M is used as in Embodiment 2. The multi-slit 41M includes the plurality of slit openings. The long-side direction of each slit opening is the Y direction. The plurality of slit openings are arranged in the X direction.

The relative position of the sample S to the object lens 31 is moved in the X direction. Thus, the Raman scattering light from the two-dimensional region in the XY directions can be detected. As in Embodiments 1 to 3, the Raman spectral image can be captured with the high SN (Signal to Noise) ratio. Additionally, since the signal light L2 from a plurality of regions can be detected at the same time, the spectrometry time can be shortened.

### Modified example 2

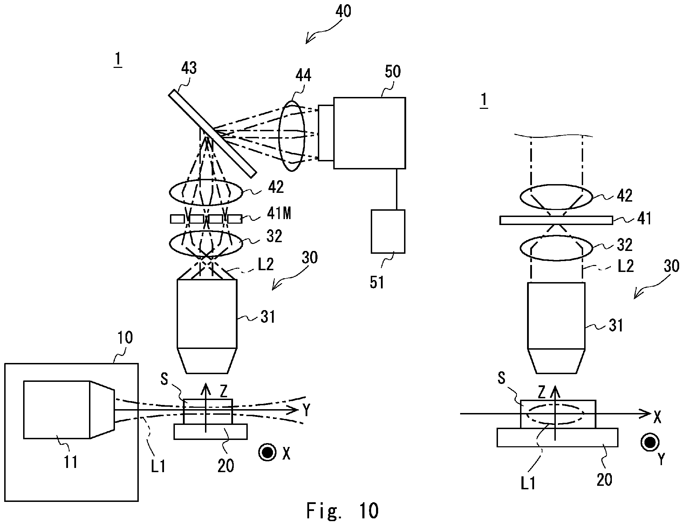

Fig. 10 is a diagram illustrating a spectrometry apparatus 1 according to Modified example 2, which is a modification of Embodiment 4. In Fig. 10, the YZ plan view is expressed on the left side and the XZ plan view is expressed on the right side. In Fig. 10, the direction of the multi-slit 41M and the wavelength dispersing direction are different from those in the structure of Fig. 8. Specifically, the multi-slit 41M includes a slit opening whose long-side direction coincides with the X direction. The width direction of the slit opening is the Y direction. The plurality of slit openings are arranged in the Y direction.

The grating 43 disperses the wavelength of the signal light L2 in the X direction and in an inclined direction. Here, the grating 43 disperses the signal light L2 in the Y direction in accordance with the wavelength. The relative position of the object lens 31 to the sample S is moved in the Y direction. Thus, the Raman scattering light from the two-dimensional region in the XY directions can be detected. As in Embodiments 1 to 3, the Raman spectral image can be captured with the high SN ratio. In the case of using the sheet-shaped illumination, the direction where the sample S is illuminated, that is, the optical axis direction of the illumination light L1 can be made orthogonal to the slit opening.

In Embodiments 1 to 4 and their modified examples described above, the illumination light L1 is delivered to the sample S from the side of the object lens 31. That is to say, the illumination light L1 and the signal light L2 are not co-axial and the illumination light L1 is delivered to the sample S not through the object lens 31. Thus, the Raman scattering light can be detected with the high SN ratio.

### (Wavelength dispersing direction)

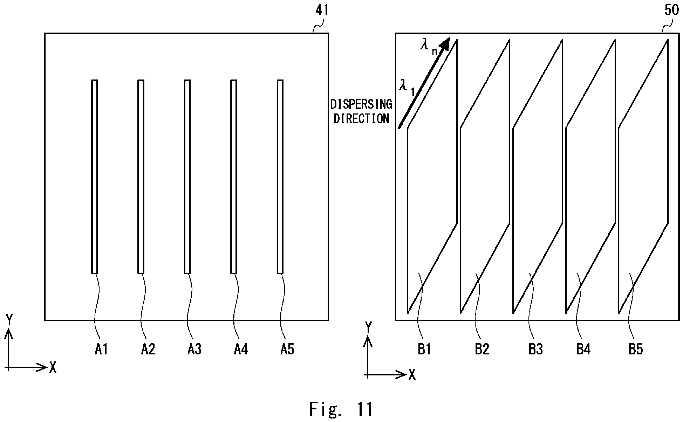

One example of the wavelength dispersing direction and the pixel arrangement direction that is applicable to the above embodiments and modified examples is described with reference to Fig. 11. Fig. 11 illustrates the multi-slit 41M and the light reception surface of the optical detector 50.

The multi-slit 41M includes five slit openings A1 to A5. Here, the Y direction is the long-side direction of each of the slit openings A1 to A5. That is to say, the X direction is the short-side direction (width direction) of the slit openings A1 to A5. The five slit openings A1 to A5 are arranged in the X direction.

On the light reception surface of the optical detector 50, the pixels are arranged along the X direction and the Y direction. The wavelength dispersing direction is the direction inclined from the X direction and the Y direction. Therefore, each of detection regions B1 to B5 where the detection light having passed the slit openings A1 to A5 is detected is a parallelogram. For example, the signal light L2 having passed the slit opening A1 is dispersed in the detection region B1. Similarly, the signal light L2 having passed the slit openings A2 to A5 is dispersed in the detection regions B2 to B5, respectively.

The detection regions B1 to B5 have two sides parallel to the Y direction and the other two sides inclined from the X direction. The direction of the two sides inclined from the X direction corresponds to the dispersing direction by the grating 43. In each of the detection regions B1 to B5, the wavelength dispersing direction is inclined from the X direction. In this manner, the measurable wavelength range can be expanded and the number of pieces of data in the wavelength direction can be increased. Note that the detection regions B1 to B5 are set so as not to overlap with each other. For example, the long wavelength (λn) side of the detection region B1 and the short wavelength (λ1) side of the detection region B2 are displaced.

### (Optical system)

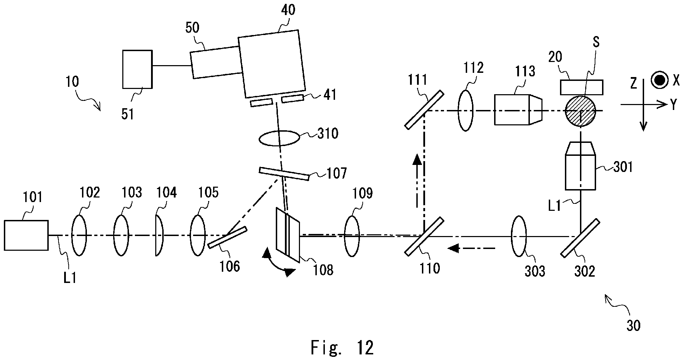

Fig. 12 is a diagram illustrating one example of the illumination optical system 10 and the detection optical system 30. In Fig. 12, one example of the optical system for scanning the illumination region is illustrated. That is to say, when the optical scanner 108 deflects the illumination light L1, the illumination region in the sample S is scanned.

The illumination optical system 10 includes a light source 101, lenses 102 to 104, a lens 105, a mirror 106, a dichroic mirror 107, an optical scanner 108, a lens 109, a dichroic mirror 110, a mirror 111, a lens 112, and a lens 113.

The light source 101 is, for example, a laser light source and generates the illumination light L1 of a single color. The illumination light L1 enters the mirror 106 through the lenses 102 to 105. Note that the lens 104 is an axicon lens or a cylindrical lens. For example, when the illumination light L1 is a Bessel beam as described in Embodiments 1 and 2, the lens 104 is an axicon lens. Alternatively, when the illumination light L1 is sheet-shaped illumination as described in Embodiments 3 and 4, the lens 104 is a cylindrical lens.

The mirror 106 reflects the illumination light L1 toward the dichroic mirror 107. The dichroic mirror 107 has a wavelength characteristic of reflecting the illumination light L1 and transmitting the Raman scattering light. The illumination light L1 reflected on the dichroic mirror 107 enters the optical scanner 108. The optical scanner 108 is, for example, a galvanometer mirror and deflects the illumination light L1 to the X direction. Thus, the illumination light L1 is scanned on the sample S.

The illumination light L1 reflected on the optical scanner 108 enters the dichroic mirror 110 through the lens 109. The dichroic mirror 110 has a wavelength characteristic of reflecting the illumination light L1 and transmitting the Raman scattering light. The illumination light L1 reflected on the dichroic mirror 110 enters the mirror 111. The illumination light L1 reflected on the mirror 111 enters the sample S through the lens 112 and the lens 113. The lens 113 is an illumination object lens.

In the sample S, the Raman scattering light is generated from the region illuminated with the illumination light L1. The detection optical system 30 for detecting the Raman scattering light is described. The detection optical system 30 includes an object lens 301, a mirror 302, a lens 303, the dichroic mirror 110, the lens 109, the optical scanner 108, the dichroic mirror 107, a lens 310, and the spectrometer 40. The dichroic mirror 110, the lens 109, and the optical scanner 108 are commonly used in the detection optical system 30 and the illumination optical system 10.

As described above, the illumination light L1 enters the sample S from the side of the object lens 301 of the detection optical system 30. The Raman scattering light generated in the sample S enters the object lens 301. The Raman scattering light from the object lens 301 is the signal light L2. The signal light L2 is reflected on the mirror 302. The signal light L2 from the mirror 302 enters the dichroic mirror 110 through the lens 303.

The dichroic mirror 110 is a beam splitter that splits the optical path of the signal light L2 and the illumination light L1 in accordance with the wavelength. The signal light L2 having transmitted the dichroic mirror 110 enters the optical scanner 108 through the lens 109. The optical scanner 108 descans the signal light L2. The signal light L2 reflected on the optical scanner 108 enters the dichroic mirror 107.

The dichroic mirror 107 is a beam splitter that splits the optical path of the signal light L2 and the illumination light L1 in accordance with the wavelength. The signal light L2 having transmitted the dichroic mirror 107 enters the lens 310. The lens 310 is an imaging lens and forms an image of the sample S on the slit 41 of the spectrometer 40. The signal light L2 having passed the slit opening of the slit 41 is subjected to wavelength dispersion in the spectrometer 40. The light dispersed by the spectrometer 40 is detected by the optical detector 50.

This structure also detects the Raman scattering light with the high SN ratio as in the embodiment. Additionally, the illumination position in the sample S can be scanned using the optical scanner 108.

### (4π detection)

In the above description, the Raman scattering light emitted in the +Z direction is detected. Described here is an example of detecting the Raman scattering light emitted in the -Z direction in addition to the +Z direction. A structure of detecting the Raman scattering light emitted in the +Z direction and the -Z direction is 4π detection.

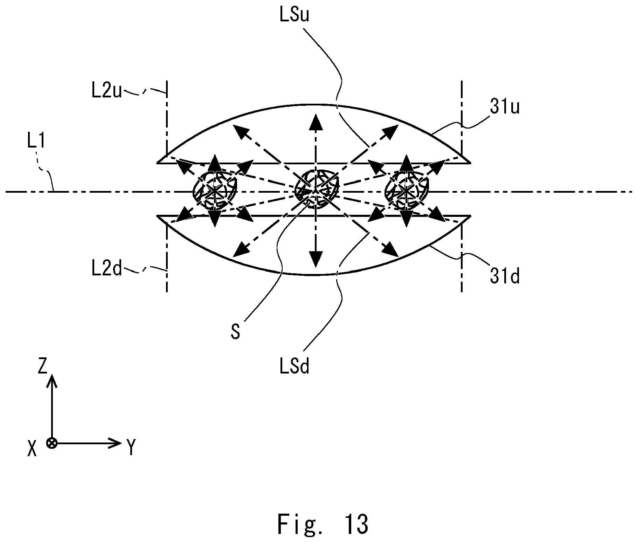

Fig. 13 is a side view schematically illustrating the periphery of the sample S. Here, the illumination light L1 is a Bessel beam. The sample S is, for example, a spheroid or an organoid. From the region illuminated with the illumination light L1, the Raman scattering light is generated in various directions. The Raman scattering light generated from the sample S to the +Z direction is Raman scattering light LSu, and the Raman scattering light generated to the -Z direction is Raman scattering light LSd.

On each of the +Z side and the -Z side of the sample S, the detection object lens 31 is disposed. The object lens 31 on the +Z side of the sample S is an object lens 31u and the object lens 31 on the -Z side is an object lens 31d in the drawing. The sample S is disposed between the object lens 31u and the object lens 31d. In other words, the object lens 31u and the object lens 31d are co-axial.

The Raman scattering light LSu enters the object lens 31u. The Raman scattering light LSu from the object lens 31u is signal light L2u. As in the aforementioned embodiment, the signal light L2u is spectrally divided in the spectrometer 40 and detected.

The Raman scattering light LSd enters the object lens 31d. The Raman scattering light LSd from the object lens 31d is signal light L2d. As in the aforementioned embodiment, the signal light L2d is spectrally divided in the spectrometer 40 and detected. For example, the detection optical system 30 can be provided for each of the signal light L2u and the signal light L2d. Thus, the detection light quantity of the Raman scattering light can be doubled substantially.

The illumination light L1 enters the sample S from the side of the object lenses 31u and 31d. That is to say, the optical axis of the illumination light L1 passes the space between the object lens 31u and the object lens 31d. Thus, the detection with the high SN ratio can be performed. Here, the optical axis of the illumination light L1 is parallel to the Y axis. Alternatively, the object lens with high NA, low magnification, and a wide field of vision can be used.

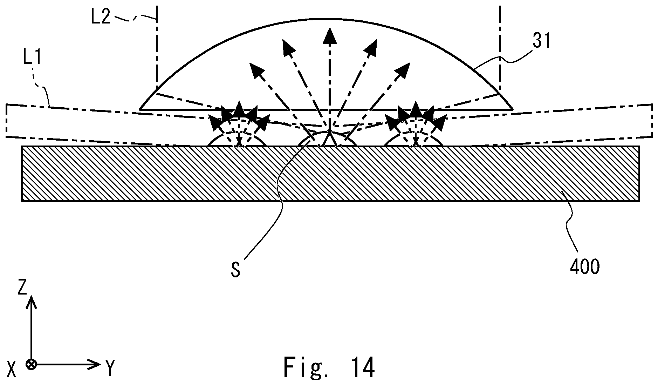

Fig. 14 is a side view schematically illustrating another example of the 4π detection. In Fig. 14, the sample S is disposed on a substrate 400. The substrate 400 is, for example, a metal substrate made of stainless steel and has high light reflectivity. A main surface of the substrate 400 is parallel to the XY plane. On a surface of the substrate 400 on the +Z side, the sample S is disposed. The sample S is a molecule or a bacterium on a cell sheet or the substrate 400. The object lens 31 is disposed only on the +Z side of the substrate 400.

The illumination light L1 is delivered to the sample S from the side of the object lens 31. The optical axis of the illumination light L1 is inclined a little from the Y direction. For example, in the XZ plan view, the illumination light L1 travels in the -Z direction. The illumination light L1 may be the sheet-shaped illumination.

From the sample S, the Raman scattering light is emitted in various directions. The Raman scattering light traveling in the -Z direction enters the substrate 400. The substrate 400 reflects the Raman scattering light traveling to the -Z direction. The Raman scattering light reflected on the substrate 400 travels in the +Z direction and enters the object lens 31. Therefore, the Raman scattering light generated not just in the +Z direction but also in the -Z direction can enter the object lens 31. The detection light from the object lens 31 can be guided to the spectrometer 40 by the detection optical system 30 described above. Thus, the detection light quantity of the Raman scattering light can be doubled substantially. In addition, the object lens with the high NA, low magnification, and wide field of vision can be used.

Additionally, the common detection optical system is used for the Raman scattering light generated on the -Z side and the Raman scattering light emitted to the +Z side. Thus, the apparatus structure can be simplified. Note that in the structure in Fig. 14, the illumination light L1 from the side of the object lens 31 is delivered to the sample S. Note that the optical axis of the sheet-shaped illumination light L1 may be inclined from the Y direction. For example, the illumination light L1 may be delivered to the sample S from the object lens side (+Z side).

### Examples

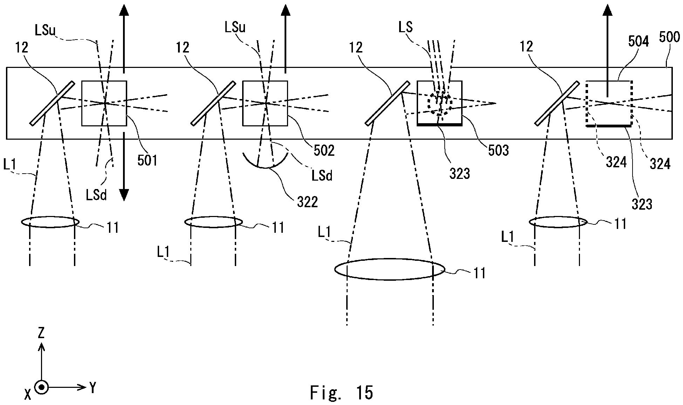

Examples of the embodiment are hereinafter described with reference to Fig. 15. Fig. 15 is a YZ plan view schematically illustrating a flow channel chip 500 for holding the sample. Here, the sample is a fluid flowing in flow channels 501 to 504. For example, the flow channel chip 500 is a micro flow channel chip where a micro channel is formed. In the flow channels 501 to 504, a biological sample can be supplied. For example, in the flow channels 501 to 504, cells or bacteria to be a sample flow. For example, the sample to flow in the flow channel may be the one emitted through a high performance liquid chromatography (HPLC) and separated for each component, or may be incorporated in a part of a process in flow cytometry.

In the flow channel chip 500, the flow channels 501 to 504 are formed along the X direction. Each of the flow channels 501 to 504 is a micro channel in which the X direction coincides with the flow channel direction of the sample. The YZ cross-sectional shape of the flow channels 501 to 504 is rectangular.

The illumination light L1 is delivered to the sample of the liquid flowing in the X direction. The illumination light L1 enters the flow channel 501 along the Y direction. That is to say, the optical axis direction of the illumination light L1 is orthogonal to the flow channel direction of the sample. By using the sheet-shaped illumination as the illumination light L1, the wide region is illuminated in the flow channel direction. The long-side direction of the slit opening of the slit 41 may coincide with the Y direction. Thus, the region that is wide in the flow channel direction can be used as the detection region. The optical axis direction of the illumination light L1, the slit direction, and the flow channel direction are not limited to the aforementioned examples. The illumination light L1 may be one or a plurality of Bessel beams.

In the flow channel chip 500, reflection elements 12 are provided adjacent to the flow channels 501 to 504. The reflection elements 12 are held in the flow channel chip 500. The illumination light L1 condensed by the lens 11 enters the reflection element 12.

The reflection element 12 functions as a mirror with a metal reflection surface. For example, the reflection surface of the reflection element 12 is a flat plane and is inclined by 45° from the Z axis. In addition, the lens 11 is disposed below the flow channel chip 500. The reflection surface of the reflection element 12 may be a concave surface so that the illumination light L1 is condensed on the sample. In addition, the optical axis of the lens 11 is parallel to the Z direction. Therefore, the reflection element 12 reflects the illumination light L1 from the lens 11 toward the flow channels 501 to 504. Thus, the sample flowing in the flow channels 501 to 504 is illuminated and the Raman scattering light is generated.

The fundamental structure of Examples given below is similar to that in the aforementioned embodiment; thus, the illustration is omitted and the description is also omitted as appropriate. The flow channels 501 to 504 correspond to Examples 1 to 4, respectively. Examples will be described below.

### Example 1

Example 1 expressed by the flow channel 501 is described. The illumination light L1 is condensed on a center of the flow channel 501. The delivery of the illumination light L1 to the sample flowing in the flow channel 501 generates the Raman scattering light LSu and LSd. As in Fig. 13, the Raman scattering light LSu is the Raman scattering light generated in the +Z direction and the Raman scattering light LSd is the Raman scattering light generated in the -Z direction. In addition, the detection optical system 30 (not illustrated in Fig. 15) is provided on each of both sides of the flow channel chip 500. In this manner, the Raman scattering light emitted in various directions can be detected.

### Example 2

Example 2 expressed by the flow channel 502 is described. The illumination light L1 is condensed on the center of the flow channel 502. The delivery of the illumination light L1 to the sample flowing in the flow channel 502 generates the Raman scattering light LSu and LSd. A reflection mirror 322 is disposed on the -Z side of the flow channel 502. The reflection mirror 322 is disposed below the flow channel chip 500. The reflection mirror 322 is a concave mirror such as a spherical mirror or an elliptical mirror. The Raman scattering light LSd reflected to the -Z side enters the reflection mirror 322 and is reflected thereon to the +Z direction. Thus, as in Fig. 14, the object lens 31 (not illustrated in Fig. 15) may be disposed only on the +Z side of the flow channel 502. Since the detection optical system can be commonly used in the Raman scattering light LSu and the Raman scattering light LSd, the apparatus structure can be simplified.

### Example 3

Example 3 expressed by the flow channel 503 is described. The illumination light L1 illuminates the entire sample. For example, the light condensing position of the illumination light L1 is deviated to the +Y direction from the flow channel 503. Thus, the Raman scattering light is generated from the wide region of the flow channel 503. Thus, the Raman scattering light can be detected from the wider region. Therefore, the signal light can be detected efficiently from the sample that is thick in the Z direction.

In addition, one surface of the flow channel 503 on the -Z side is a metal reflection surface 323. Therefore, the Raman scattering light LS emitted to the -Z side is reflected on the metal reflection surface 323. Then, the Raman scattering light LS reflected on the metal reflection surface 323 progresses in the +Z direction. As in Example 2, the object lens 31 (not illustrated in Fig. 15) may be disposed only on the +Z side of the flow channel 502. Thus, as in Example 2, the apparatus structure can be simplified.

### Example 4

Example 4 expressed by the flow channel 504 is described. In Example 4, two surfaces of the flow channel 504 function as dichroic mirrors 324. An entry surface on the entry side of the illumination light L1 and an emission surface on the emission side thereof correspond to the dichroic mirrors 324. The dichroic mirror 324 transmits the illumination light L1, which is the excitation light, and reflects the Raman scattering light. The Raman scattering light emitted in the +Y direction or the -Y direction is reflected on the dichroic mirror 324.

The Raman scattering light with the -Z-direction component is reflected on the dichroic mirror 324 and the metal reflection surface 323. Thus, the light is extracted from the flow channel 504 in the +Z direction. Accordingly, the Raman scattering light with the large +Y-direction component can enter the object lens 31 (not illustrated in Fig. 15). That is to say, the Raman scattering light whose Y-direction component is larger than the Z-direction component can be detected. Therefore, the detection light quantity in the optical detector can be made larger than that in Examples 2 and 3.

### Example 5

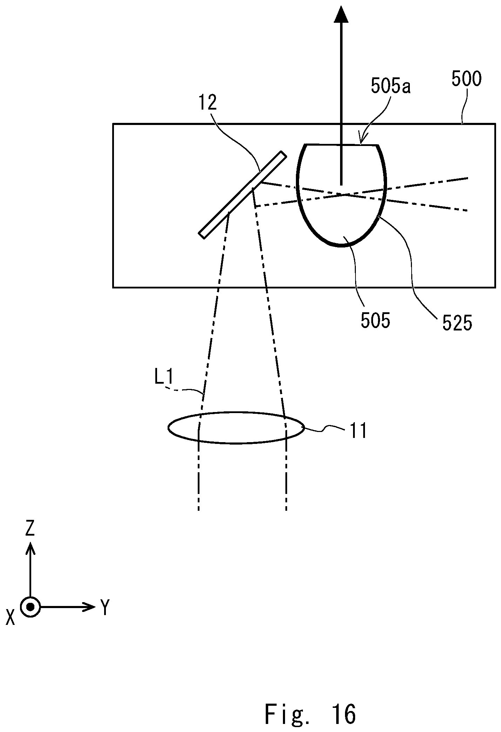

Fig. 16 is a diagram illustrating a flow channel 505 in Example 5. In Example 5, the cross-sectional shape of the flow channel 505 is a curved surface. That is to say, the flow channel 505 is elliptical in the YZ plan view. An inner peripheral surface of the flow channel 505 is a metal reflection surface 525. The +Z side of the flow channel 505 serves as an extraction unit 505a. Thus, the flow channel 505 functions as an integrating sphere. The Raman scattering light emitted in various directions is reflected on the metal reflection surface 525 and extracted from the extraction unit 505a. Thus, the detection light quantity in the optical detector can be increased. Note that the part that the illumination light L1 will pass is configured to transmit the illumination light.

### Example 6

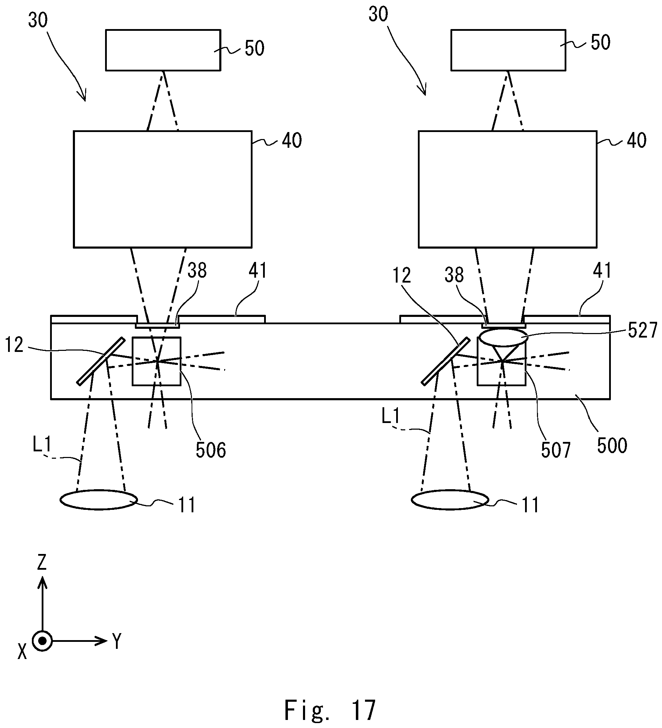

Fig. 17 is a YZ plan view illustrating a flow channel 506 for Example 6 and a flow channel 507 for Example 7. First, Example 6 is described. In the flow channel chip 500, the flow channel 506 is formed. The flow channel 506 is formed along the X direction. The illumination light L1 is the sheet-shaped illumination. The slit 41 is provided directly above the flow channel 506. The slit 41 is placed on the flow channel chip 500. In this structure, the slit 41 may be disposed between the sample S and the detection object lens that is not illustrated.

The slit 41 is formed along the direction of the flow channel 506. In other words, regarding the slit opening of the slit 41, the long-side direction is the X direction and the short-side direction (slit width direction) is the Y direction. In the slit opening part of the slit 41, a filter 38 is provided. The filter 38 blocks the illumination light L1 and transmits the Raman scattering light. Note that the filter 38 is provided between the slit 41 and the flow channel 506 but may alternatively be disposed on the spectrometer 40 side relative to the slit 41.

In Examples, the slit 41 is provided on the sample side relative to the detection object lens in this manner. Therefore, it is unnecessary to provide an imaging optical system in the middle of the detection optical system. Thus, the apparatus structure can be simplified. Needless to say, the slit 41 may be configured as the multi-slit 41M.

### Example 7

In the flow channel 507 in Example 7, a light condensing element 527 is added to the structure of Example 6. Specifically, the light condensing element 527 is provided on the flow channel 507. The light condensing element 527 functions as a lens that condenses the Raman scattering light. The Raman scattering light condensed by the light condensing element 527 enters the slit 41. For example, the light condensing element 527 is provided in the flow channel chip 500. Alternatively, by making the +Z-side part of the flow channel 507 have a curved surface, the light condensing element 527 can be mounted within the flow channel chip 500. The light condensing element 527 may be a cylindrical lens whose long-side direction coincides with the X direction.

Thus, the detection NA can be increased. Accordingly, the spatial resolution can be increased. Additionally, the entry NA of the spectral optical system of the spectrometer 40 can be reduced.

### Example 8

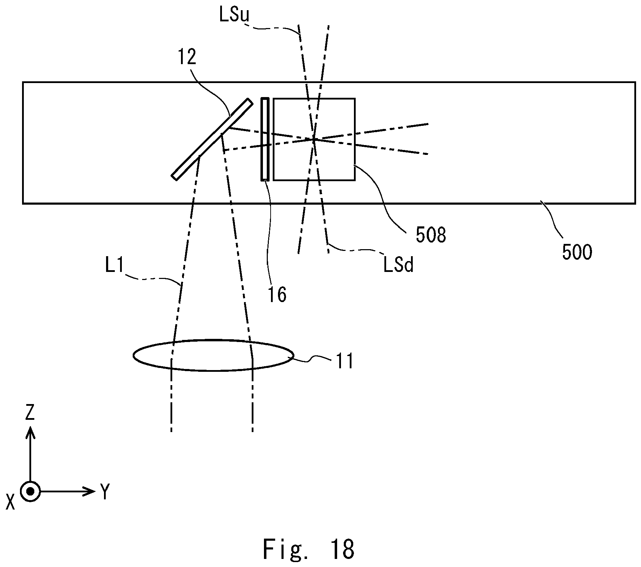

Fig. 18 is a YZ plan view expressing Example 8. In Example 8, a filter 16 is provided near a flow channel 508. The filter 16 is, for example, a laser line filter or a bandpass filter that transmits the laser wavelength of the laser light that serves as the illumination light L1. The filter 16 is disposed between the reflection element 12 and the flow channel 508. Between the sample and the lens 11 that is the illumination object lens, the filter 16 is disposed. By the provision of the filter 16 between the lens 11 and the sample in this manner, the light other than the laser wavelength is prevented from entering the sample. The Raman scattering light is generated only from the light with the laser wavelength. Accordingly, the noise of the signal light can be reduced and the Raman spectrometry can be performed suitably.

### Example 9

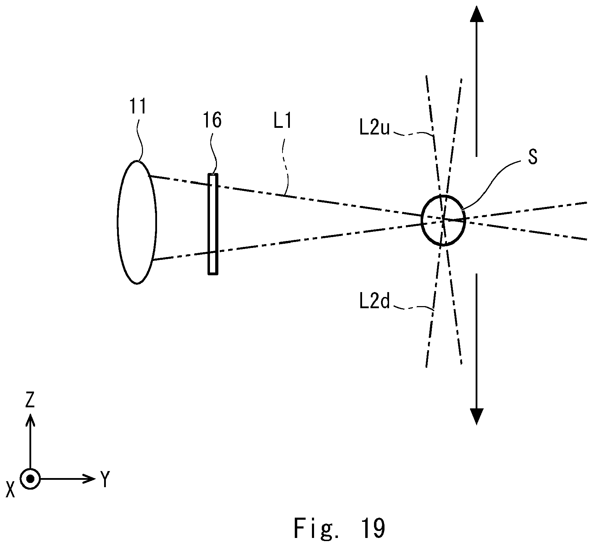

Fig. 19 is a YZ plan view expressing Example 9. In Example 9, the filter 16 is disposed between the sample S and the lens 11. The lens 11 is the illumination object lens that condenses the illumination light L1 on the sample S as described above. The optical axis of the lens 11 is parallel to the Y direction. The illumination light L1 condensed by the lens 11 enters the sample S through the filter 16. For example, the laser line filter and the bandpass filter that transmit the laser wavelength of the laser light that serves as the illumination light L1 are given. The filter 16 has a thickness of about 300 µm. Such a structure can also prevent the light other than the laser wavelength from entering the sample. The Raman scattering light is generated only by the light with the laser wavelength. Accordingly, the noise of the signal light can be reduced and the Raman spectrometry can be performed suitably.

### (Polarized state)

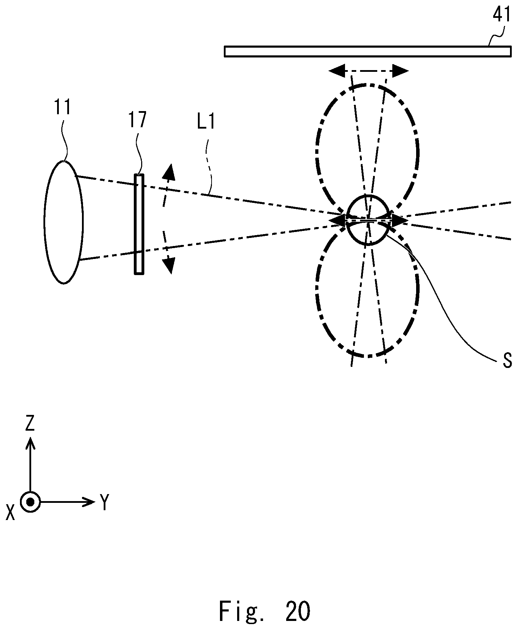

Next, one example of a deflection state of the illumination light L1 is described with reference to Fig. 20. Fig. 20 is a YZ plan view illustrating a structure of the periphery of the sample. The polarized state of the illumination light L1 is schematically illustrated. Here, the illumination light L1 to be condensed on the sample is in the state of being polarized in parallel to the optical axis of the illumination light L1 (Y direction). The illumination light L1 is the sheet illumination. In addition, the slit opening of the slit 41 is parallel to the Y direction.

Between the lens 11 and the sample S, a polarization control element 17 is disposed. The polarization control element 17 is a split wavelength plate. The polarization control element 17 is desirably a two-split element. In addition, the illumination light L1 is condensed by the lens 11. Therefore, at the focal position of the lens 11, the illumination light L1 can create a large electric field component in the optical axis direction thereof. That is to say, at the detection position, the polarizing direction of the illumination light L1 is parallel to the optical axis direction. Note that the polarization control element 17 may be disposed on the light source side relative to the lens 11.

Thus, the signal light L2 that enters the slit 41 has the larger polarization component that is parallel to the slit opening. In the signal light L2 that enters the grating 43, a P-polarized component increases. For example, when the signal light L2 that enters the grating 43 is the P-polarized light, the groove direction of the grating 43 and the vibration direction of the electric field vector are parallel and when the signal light L2 is S-polarized light, the groove direction and the vibration direction are orthogonal. Accordingly, the diffraction efficiency of the grating 43 can be increased. Since the polarizing characteristic varies depending on the characteristic of the grating or the wavelength region of the observation target, the polarization is controlled in accordance with the condition.

The embodiments, modified examples, and examples described above can be used in combination as appropriate. For example, for any of the sheet-shaped illumination, the Bessel beam, and the multi-beam, the filter 16 may be used in the optical path. For any of the sheet-shaped illumination, the Bessel beam, and the multi-beam, 4π detection may be performed. Two or more of the embodiments, modified examples, and examples may be combined as appropriate.

Furthermore, not just the Bessel beam and the sheet illumination but also lattice illumination may be used. By the use of the lattice illumination, the sample S can be illuminated with the lattice-shaped illumination pattern. Moreover, an edge filter that blocks the light with the wavelength of the illumination light L1 and transmits the Raman scattering light may be disposed in the optical path of the signal light L2.

In the case of performing the spectrometry on the sample flowing in the flow channel, for example, the following three exposure methods can be used:
1) The sample in the flow channel is stopped and measured, and after the measurement, the next sample is measured.
2) While the sample flows in the flow channel, the measurement is performed. At this time, the charge shift rate of the CCD camera and the flow rate of the sample in the flow channel are made the same and the signal light from the same sample is integrated in the single pixel.
3) While the sample flows in the flow channel, the measurement is performed. At this time, after the measurement is performed a plurality of times in a short light exposure time, the signals of the single sample are integrated by data processing. The place of the sample in the measurement time is measured in advance by microscopic observation such as Rayleigh scattering. Based on this measurement result, the Raman data from the same sample are extracted on CCD and integrated. In the different pixels in the optical detector 50, the signal light from the same sample is detected. That is to say, the signal light from the same sample flowing in the flow channel is detected a plurality of times in the optical detector 50. By integrating the detection signals in the different pixels in the optical detector 50, the Raman scatting light from the same sample is obtained.

It is effective to reduce the readout noise when a cell or a bacterium in the fluid is observed. It is preferable to set the total magnification close to cell (bacterium):camera pixel = 1:1. The cell as the sample corresponds to one pixel of the optical detector 50. For example, when the entire apparatus has a magnification of 1, assuming that the cell diameter be 20 µm, the cell comes within the (1 x n) pixels. Note that n is an integer of 2 or more and corresponds to the number of pixels in the direction where the Raman scattering light is dispersed. As the CCD camera, for example, PIXIS 400B of Teledyne with one square pixel having a size of 20 µm on each side can be used. The magnification can be changed in accordance with the size of the cell and the purpose. In addition, in a case of observation with a magnification of the entire apparatus of about 5 times, if assuming that the cell diameter be 20 µm, the cell falls within (5 x n) pixels. Reducing the total magnification can improve the SN ratio. One pixel of the optical detector 50 corresponds to the cell as the sample. For example, the magnification of the object lens 31 and the like may be determined so that the cell is detected by being equivalent to the size of one pixel.

Here, the optical detector 50 detects the signal light dispersed in the spectrometer 40. Therefore, on the light reception surface of the optical detector 50, the signal light from the cell diffuses in the dispersing direction. Even if the magnification is set so that one pixel of the optical detector 50 corresponds to the cell as the sample, the signal light from the cell is detected in a plurality of pixels in the dispersing direction. The signal light from the cell is detected in the (1 x n) pixels of the optical detector 50. In other words, the signal light from the cell is detected in one pixel of the optical detector 50 in a direction orthogonal to the dispersing direction. It is preferable that the signal light L2 be detected at the magnification such that the cell as the sample corresponds to one pixel of the optical detector 50 in the direction orthogonal to the wavelength dispersing direction of the wavelength dispersive element. In the direction orthogonal to the wavelength dispersing direction, it is preferable to measure at the magnification to make the cell fall within five or less pixels, and more preferable to measure at the magnification to make the cell fall within one or less pixels.

Moreover, the illumination light L1 may be scanned in the optical axis direction of the detection object lens 31. For example, in the case of the sample flowing in the flow channel, it is possible to acquire the spectrum of the entire sample instead of acquiring the image. In this case, since the uniform illumination is desired also in the height direction (optical axis direction of the detection object lens 31), the entire cell is illuminated while the side illumination is scanned at high speed in that direction. For example, in the structures of Fig. 1 to Fig. 10 and the like, the illumination light L1 is scanned in the Z direction.

In the above description, the spectrometry is performed while the sample or the illumination light is scanned; however, the sample or the illumination light may not be scanned. For example, the measurement may be performed while the sample is fed to the flow channel. In other words, means for feeding the sample to the flow channel may be provided instead of means for scanning the sample or the illumination light.

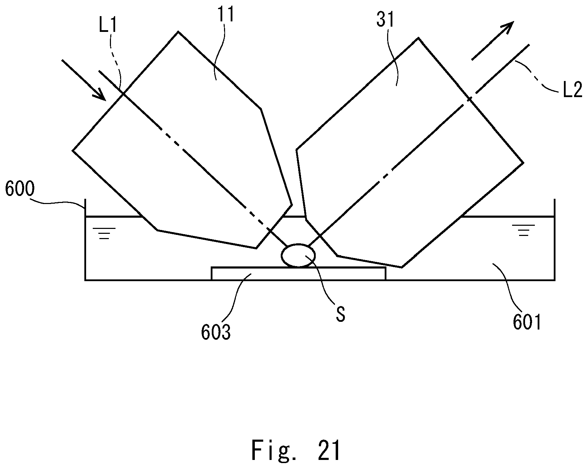

In Fig. 12, the optical axis of the lens 113 is parallel to the horizontal direction and the optical axis of the object lens 301 is parallel to the vertical direction; however, the optical axes may be inclined from the horizontal direction and the vertical direction. Fig. 21 illustrates one example of a structure in which the optical axes of the illumination light and the detection light are inclined from the horizontal direction and the vertical direction.

In Fig. 21, water 601 is stored in a dish 600. Moreover, in the dish 600, a sample substrate 603 that holds the sample S is disposed. On the sample substrate 603, the sample S is placed.

On an upper side of the dish 600, the object lens 31 and the lens 11 are disposed. The object lens 31 and the lens 11 are disposed diagonally above the sample S. The illumination light L1 is delivered to the sample S from diagonally above the sample S. The illumination light L1 from the lens 11 propagates in the water and enters the sample S. Additionally, the Raman scattering light generated in the sample S and traveling diagonally upward enters the object lens 31. The Raman scattering light from the sample S propagates in the water and enters the obj ect lens 31.

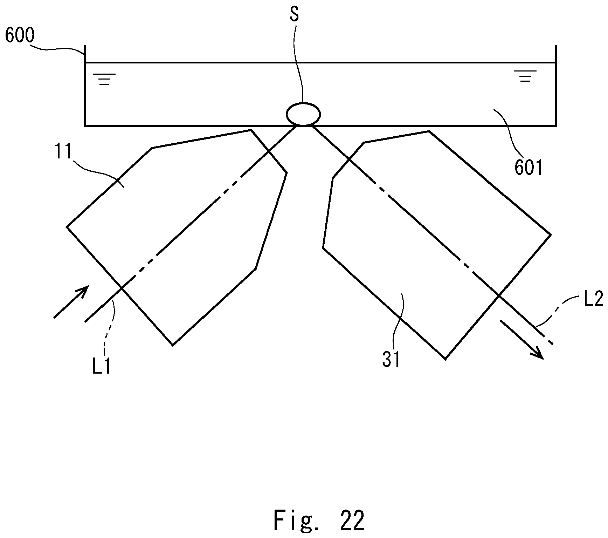

Fig. 22 illustrates another example of a structure in which the optical axes of the illumination light and the detection light are inclined from the horizontal direction and the vertical direction. In Fig. 22, the water 601 is stored in the dish 600. Additionally, the sample S is disposed in the dish 600. The dish 600 is formed of a transparent material such as glass.

The object lens 31 and the lens 11 are disposed below the dish 600. That is to say, the illumination light L1 is delivered to the sample S from diagonally below the sample S. The illumination light L1 from the lens 11 transmits through a bottom part of the dish 600 and enters the sample S. The Raman scattering light generated in the sample S and traveling diagonally downward enters the object lens 31. The Raman scattering light from the sample S transmits through the bottom part of the dish 600 and enters the object lens 31.

In the above embodiments, the signal light is described as the Raman scattering light mainly; however, the signal light may be light other than the Raman scattering light. Therefore, the spectrometry apparatus according to this embodiment may be a spectrometry apparatus for other than Raman spectrometry. For example, a spectrometry apparatus that detects fluorescence excited by excitation light or a spectrometry apparatus that measures an infrared absorption spectrum or a near-infrared absorption spectrum may be given. These spectrometry apparatuses can also perform spectrometry with the high SN ratio. In particular, it is suitable for a spectrometry apparatus that is required to perform high-speed measurement and repeated measurement. The application of the spectrometry apparatus is not limited to imaging. In the case of the uniform sample such as a solution, the wide area can be measured at the same time; thus, the signal quantity increases and the measurement time can be shortened. In this case, the measured spectra are integrated.

The spectrometry apparatus 1 can perform spectrometry of the self-emission Raman scattering light. In addition, the spectrometry apparatus 1 may perform spectrometry of stimulated Raman scattering light. In the case of measuring the stimulated Raman scattering light, pump light and Stokes light may be delivered to the sample. That is to say, two laser light sources with different wavelengths are used. In this case, the arrangement may be determined so that pump light and Stokes light are delivered to the sample from the side.

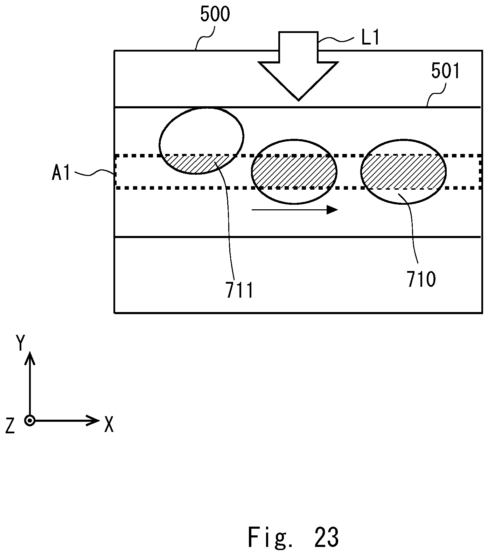

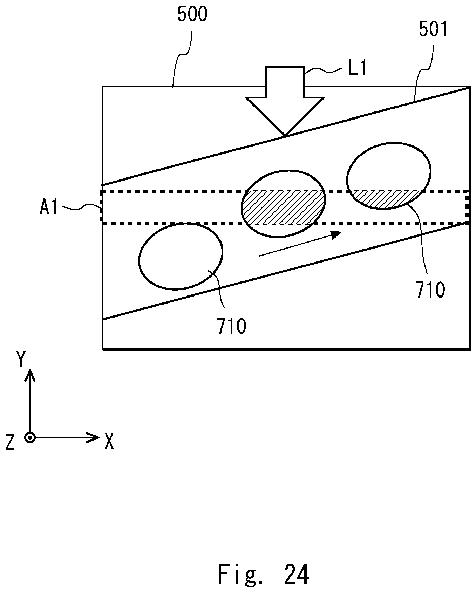

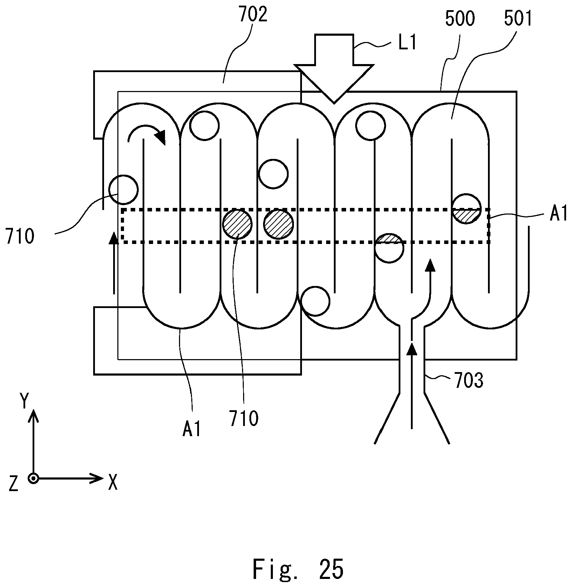

Next, with reference to Fig. 23 to Fig. 25, the direction of the flow channel with respect to the direction of the slit is described. Fig. 23 to Fig. 25 are diagrams schematically illustrating the flow channel 501 provided in the flow channel chip 500. Fig. 23 is a diagram schematically illustrating a structure in a case where the long-side direction of the slit is parallel to the direction of the flow channel 501. Fig. 24 is a diagram schematically illustrating a structure in a case where the long-side direction of the slit is inclined from the direction of the flow channel 501. Fig. 25 is a diagram schematically illustrating a structure in which the flow channel 501 meanders.

In Fig. 23 to Fig. 25, the slit opening A1 of the slit is projected on the flow channel chip 500. In Fig. 23 to Fig. 25, the long-side direction of the slit opening A1 is parallel to the X direction. In other words, the width direction of the slit opening A1 coincides with the Y direction. A region corresponding to the slit opening A1 is a detection region of the flow channel 501. In addition, the illuminating direction is parallel to the Y direction. The Z direction orthogonal to the paper surface is parallel to the optical axis of the object lens.

In Fig. 23, samples 710 and 711 of a measurement target flow in the flow channel 501. Here, the samples 710 and 711 may be the biological samples such as cells. In the flow channel 501, a fluid to feed the samples 710 and 711 is supplied. In Fig. 23, the flow channel 501 is provided along the X direction. Therefore, the samples 710 and 711 flow in the X direction.

In Fig. 23, the long-side direction of the slit opening A1 is parallel to the direction of the flow channel 501. In Fig. 24, the long-side direction of the slit opening A1 is inclined from the direction of the flow channel 501. In other words, the direction of the flow channel 501 is inclined from the X direction and the Y direction.

In Fig. 24, the sample 710 flows in the flow channel 501 so as to cross the detection region corresponding to the slit opening A1. Thus, in the structure of Fig. 24, the signal light can be detected from the wider range of the sample 710. For example, it is assumed that the width of the flow channel 501 is wider than the size corresponding to the width of the slit opening A1. It is assumed that, as illustrated in Fig. 23, the sample 711 flows in the flow channel 501 off the center of the flow channel 501 in the Y direction. In this case, just the signal light from a part of the sample 711 can be detected.

In the structure of Fig. 24, any sample 710 can cross the detection region corresponding to the slit opening A1. Thus, the entire sample 710 can pass the detection region corresponding to the slit opening A1. Since the optical detector 50 detects the signal light while the sample 710 crosses the slit opening A1, the signal light from the wider range of the sample 710 can be measured.

In Fig. 25, the flow channel 501 is bent so as to meander. The sample 710 flowing in the flow channel 501 reciprocates in the Y direction. In other words, the sample 710 flows alternately in the +Y direction and the -Y direction along the flow channel 501. The sample 710 flows in the flow channel 501 so as to repeatedly cross the detection region corresponding to the slit opening A1. Thus, the spectrometry of the sample 710 can be repeatedly performed.

Additionally, as illustrated in Fig. 25, a cooling region 702 may be provided in at least a part of the flow channel chip 500. In the cooling region 702, the flow channel chip 500 is cooled. For example, in the cooling region 702, cooling means such as a coolant is in contact with the flow channel chip 500. Thus, the spectrometry while cooling the cell corresponding to the sample 710 is possible. Accordingly, the optical damage on the sample 710 can be reduced.

Additionally, a branch 703 may be provided in the middle of the flow channel 501. By supplying a solution and the like from the branch 703, the flow rate of the sample 710 can be changed. That is to say, the measurement can be performed while changing the flow rate.

In addition, a solution or a chemical that reacts with the sample 710 may be supplied from the branch 703. Thus, the change in spectrum due to the reaction can be measured. That is to say, the spectra before the reaction, in the middle of the reaction, and after the reaction can be measured.

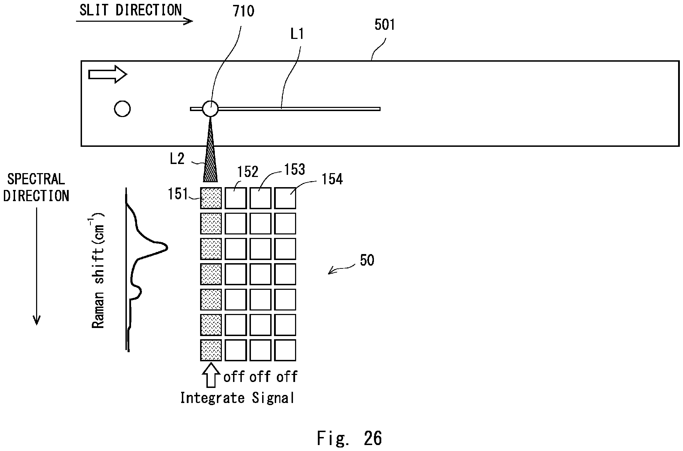

Next, a method of integrating the signal light from the same sample in the pixels is described with reference to Fig. 26 to Fig. 28. Fig. 26 to Fig. 28 are schematic diagrams illustrating the sample 710 flowing in the flow channel 501 and the operation of the pixels in the optical detector 50. The sample 710 is a cell or the like flowing in the flow channel 501. The sample 710 flows in the flow channel 501 together with the fluid such as a solution. As illustrated in Fig. 26 to Fig. 28, the slit direction and the spectral direction are orthogonal directions.

Additionally, in Fig. 26 to Fig. 28, four pixel rows of the optical detector 50 are illustrated schematically. The pixels in the first row constitute a pixel row 151. Similarly, the second, third and fourth pixel rows constitute pixel rows 152 to 154, respectively. Here, the charge shift rate of the CCD camera and the flow rate of the sample in the flow channel are the same.

In one pixel row, the Raman spectrum is measured. That is to say, the arrangement direction of the pixels included in the pixel row 151 is parallel to the spectral direction of the spectrometer 40. The orthogonal direction orthogonal to the spectral direction corresponds to the direction of the flow channel. Therefore, the signal light from the sample 710 flowing in the flow channel 501 is detected in the order of the pixel row 151, the pixel row 152, the pixel row 153, and the pixel row 154.

Here, the flow rate is adjusted so that the flow rate of the sample 710 flowing in the flow channel 501 and the transferring rate of the signal charges between the pixel rows coincide. For example, in Fig. 26, the sample 710 exists at a position corresponding to the pixel row 151. In the pixels in the pixel row 151, the signal charges according to the light reception quantity are generated. Then, the CCD reads out the signal charges generated by the pixels in the first pixel row 151. In Fig. 26, the signal light from the sample 710 is detected in each pixel of the pixel row 151.

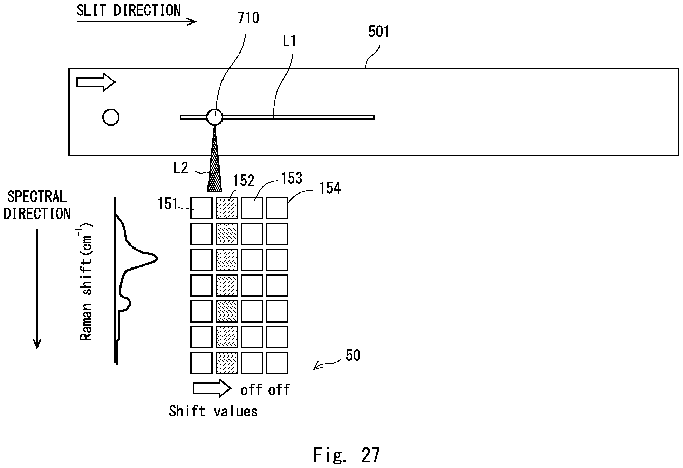

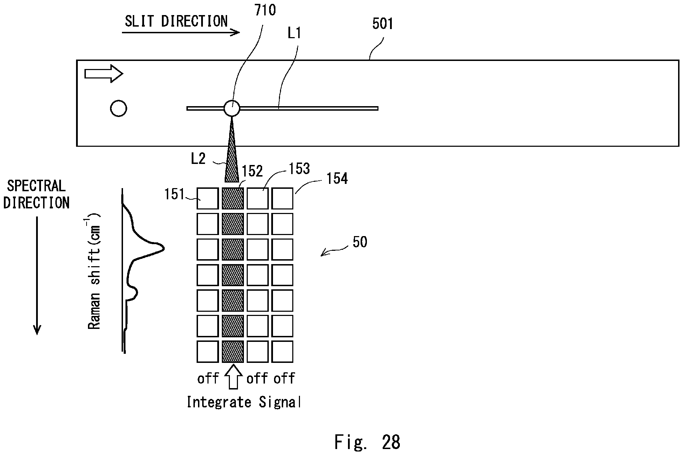

The sample 710 flows in the flow channel 501 as illustrated in Fig. 27 and Fig. 28. In Fig. 27, the sample 710 moves to the position corresponding to a place between the pixel row 151 and the pixel row 152. The signal charges read out in the pixels in the pixel row 151 are transferred to the pixel row 152.

Then, as illustrated in Fig. 28, the sample 710 moves to the position corresponding to the pixel row 152. Then, each pixel in the pixel row 152 generates the signal charge according to the light reception quantity. In Fig. 28, the signal light from the sample 710 is detected in each pixel in the pixel row 152. The CCD reads out the signal charges generated in the pixels in the second pixel row 152. Therefore, the signal charges generated in the pixels in the first pixel row and the signal charges generated in the pixels in the second pixel row 152 are integrated.

Thus, the signal charges generated in a plurality of pixels can be integrated. In other words, the signal charges for the four pixel rows 151 to 154 are integrated for each wavelength. Even though the pixel address in the direction orthogonal to the spectral direction is different, the signal light from the same sample 710 is detected. Therefore, the SN ratio can be improved. Needless to say, the number of integrated pixels is not limited to four.

Thus, in the case of performing spectrometry of the sample 710 flowing in the flow channel 501, the flow rate of the sample is adjusted to be the rate corresponding to the transferring rate of the signal charges. Then, the signal charges in the plurality of pixels are integrated in the optical detector 50. The signal light L2 from the same sample 710 is integrated in the plurality of pixel rows and detected. Thus, the measurement with the higher SN ratio becomes possible.

While the invention made by the present inventor have been described specifically based on the embodiments, the present invention is not limited to these embodiments and it is apparent that various modifications are possible within the range not departing from the spirit thereof.

This application is based upon and claims the benefit of priority from Japanese Patent Application No. 2021-16751, filed on February 4, 2021, the entire contents of which are incorporated herein by reference.

### Reference Signs List

- 1: SPECTROMETRY APPARATUS
- 10: ILLUMINATION OPTICAL SYSTEM
- 11: LENS
- 16: FILTER
- 17: POLARIZATION CONTROL ELEMENT
- 30: DETECTION OPTICAL SYSTEM
- 31: OBJECT LENS
- 32: LENS
- 40: SPECTROMETER
- 41: SLIT
- 42: LENS
- 43: GRATING
- 44: LENS
- 50: OPTICAL DETECTOR
- 51: PROCESSING UNIT
- 101: LIGHT SOURCE
- 102 to 105: LENS
- 106: MIRROR
- 107: DICHROIC MIRROR
- 108: OPTICAL SCANNER
- 109: LENS
- 500: FLOW CHANNEL CHIP
- 501 to 508: FLOW CHANNEL
- 702: COOLING REGION
- 703: BRANCH
- 710: SAMPLE
- L1: ILLUMINATION LIGHT
- L2: SIGNAL LIGHT

## Claims

1. A spectrometry apparatus comprising:
a detection object lens that signal light from a sample enters;
a slit having a slit opening through which the signal light passes;
a wavelength dispersive element that disperses the signal light having passed the slit opening in accordance with a wavelength;
a two-dimensional optical detector that detects the signal light that has been subjected to wavelength dispersion by the wavelength dispersive element;
a processing unit that generates a spectral image, based on a detection signal of the two-dimensional optical detector; and
an illumination optical system that makes illumination light enter the sample from a side of the detection object lens.

2. The spectrometry apparatus according to claim 1, further comprising means for scanning the sample or the illumination light.

3. The spectrometry apparatus according to claim 1 or 2, further comprising means for feeding the sample in a flow channel.

4. The spectrometry apparatus according to any one of claims 1 to 3, wherein an arrangement direction of pixels in the two-dimensional optical detector and a dispersing direction of the wavelength dispersive element are inclined diagonally.

5. The spectrometry apparatus according to any one of claims 1 to 4, wherein the slit is a multi-slit having a plurality of slit openings.

6. The spectrometry apparatus according to claim 5, wherein the slit opening is formed along a direction that is orthogonal or parallel to an optical axis direction of the illumination light that enters the sample.

7. The spectrometry apparatus according to any one of claims 1 to 6, wherein the illumination optical system condenses the illumination light on the sample as a Bessel beam, sheet-shaped illumination, or lattice illumination.

8. The spectrometry apparatus according to any one of claims 1 to 7, further comprising:
an illumination object lens that condenses the illumination light on the sample; and
a filter that is disposed between the illumination object lens and the sample and transmits the illumination light.

9. The spectrometry apparatus according to any one of claims 1 to 8, further comprising:
an illumination object lens that condenses the illumination light on the sample; and
a polarization control element that makes a polarized state in a direction parallel to an optical axis of the illumination light on the sample, wherein the slit opening is formed along the optical axis direction.

10. The spectrometry apparatus according to any one of claims 1 to 9, wherein
the sample flows in the flow channel, and
the optical axis of the illumination light that enters the sample is in a direction orthogonal to a direction of the flow channel.

11. The spectrometry apparatus according to claim 10, wherein at least one surface of the flow channel is a reflection surface that reflects the signal light.

12. The spectrometry apparatus according to any one of claims 1 to 11, wherein
the signal light from the sample flowing in the flow channel is detected in different pixels in the two-dimensional optical detector, and
detection signals from the different pixels are integrated.

13. The spectrometry apparatus according to any one of claims 1 to 12, wherein the signal light is detected at a magnification at which a cell as the sample corresponds to one pixel of the two-dimensional optical detector in a direction orthogonal to a wavelength dispersing direction of the wavelength dispersive element.

14. The spectrometry apparatus according to any one of claims 1 to 13, wherein the sample or the illumination light is scanned in a direction along an optical axis of the detection object lens.

15. A spectrometry method comprising:
a step of illuminating a sample from a side of a detection object lens;
a step of causing signal light from the sample to enter the detection object lens;
a step of causing the signal light to pass a slit opening of a slit;
a step of causing the signa light having passed the slit opening to be subjected to wavelength dispersion by a wavelength dispersive element;
a step of detecting the signal light subjected to the wavelength dispersion by the wavelength dispersive element, with a two-dimensional optical detector; and
a step of generating a spectral image, based on a detection signal of the two-dimensional optical detector.
